# FASCICULE DE BREVET EUROPEEN

(11) **EP 2 132 924 B1**
(45) Date de publication et mention de la délivrance du brevet: **18.04.2018**
(21) Numéro de dépôt: 07871944.0
(22) Date de dépôt: 14.12.2007
(51) Int. Cl.: H04N 1/60

(54) **PROCEDES ET SYSTEMES POUR DES AFFICHAGES DE CORRECTION CHROMATIQUE AVEC DES GAMMES CHROMATIQUES DIFFERENTES**
VERFAHREN UND VORRICHTUNG FUR ANZEIGE DER FARBKORREKTUR MIT VERSCHIEDEN FARBTONBEREICH
METHODS AND SYSTEMS FOR DISPLAYS WITH CHROMATIC CORRECTION HAVING DIFFERING CHROMATIC RANGES

(30) Priorité: 03.04.2007 US 921579 P
(43) Date de publication de la demande: 16.12.2009
(73) Titulaire: Thomson Licensing DTV, 92130 Issy-les-Moulineaux (FR)
(72) Inventeur: DOSER, INGO, 78166 Donaueschingen (DE); STAUDER, JURGEN, F-35440 Montreuil/ille (FR); LEE, Bongsun, La Crescenta, California 91214 (US)
(74) Mandataire: Novagraaf Technologies
(86) Numéro de dépôt international: PCT/FR2007/052528
(87) Numéro de publication internationale: WO 2008/122702

(56) Documents cités:
- EP-A- 1 578 140
- US-A1- 2002 120 781
- US-A1- 2005 152 597
- US-A1- 2005 152 612

## Description

Les présents principes concernent généralement des affichages de télévision et, plus particulièrement, des procédés et des systèmes pour une correction chromatique afin d'obtenir des résultats prévisibles sur des affichages avec des gammes chromatiques différentes.

Dans l'industrie cinématographique d'aujourd'hui, les couleurs d'un contenu cinématographique sont en général graduées pour des affichages avec une gamme chromatique unique définie par des couleurs de luminophores de tube cathodique (CRT), correspondant à la norme chromatique soit de l'Union européenne de diffusion (EBU), soit de la Société des ingénieurs du cinéma et de la télévision (SMPTE-C) pour la définition de normes, et des 709 couleurs pour la haute définition de l'Union internationale des télécommunications (ITU). Celles-ci sont les normes actuelles pour l'utilisation dans la détermination de la gamme chromatique de référence (RCG) pour des affichages. Cependant, des affichages avec des gammes chromatiques non standard sont actuellement courantes parmi les clients de contenu cinématographique.

En cas d'édition des couleurs d'une image sur un affichage avec une gamme chromatique de référence autre que la gamme chromatique de l'affichage cible, les couleurs résultantes peuvent paraître insatisfaisantes sur l'affichage cible. Pour illustrer des cas où les couleurs résultantes peuvent paraître insatisfaisantes, les deux cas suivants sont décrits.

Le premier cas concerne des affichages de grande consommation ayant des gammes chromatiques grossièrement de la même taille que l'affichage de référence, mais les couleurs primaires d'affichage ne sont pas égales aux couleurs primaires d'affichage de l'affichage de référence pendant la création du contenu. Dans ces circonstances, il est souhaitable de garantir que les couleurs peuvent être représentées précisément sur les affichages de grande consommation.

Le second cas concerne l'existence actuelle d'affichages à gamme chromatique étendue étant utilisés sur le terrain. Dans ces circonstances, aucun procédé n'existe pour corriger chromatiquement des affichages de grande consommation par rapport à ces affichages à gamme chromatique étendue. Par exemple, ces affichages de grande consommation peuvent utiliser une gamme chromatique de référence différente mais peuvent être susceptibles ou non d'afficher seulement des couleurs en accord avec les normes de gamme chromatique étendue.

Il existe une analogie à la situation lorsque la télévision couleur a été introduite initialement aux États-Unis. Beaucoup d'ensembles différents de couleurs primaires ont été utilisés à cette époque qui ne permettaient pas une colorimétrie unifiée. Cependant, l'accumulation par un des principaux fabricants de postes de télévision d'une quantité significative de luminophores produits par un fabricant particulier de luminophores a conduit à la formation effective d'une quasi-norme et, ensuite, finalement d'une norme (SMPTE-C). Cependant la Commission fédérale des communications (FCC) n'a jamais adopté celle-ci et l'industrie de fabrication de postes de télévision doit vivre avec cette dichotomie. Il a existé des tentatives par la Société des ingénieurs du cinéma et de la télévision (SMPTE) d'émuler les couleurs du Comité national de système de télévision (NTSC) sur un moniteur SMPTE-C qui a finalement échoué pour des raisons technologiques à cette époque.

La gamme chromatique d'un affichage est déterminée par la technologie d'affichage choisie. En ce moment, un client a le choix entre les technologies suivantes (également qualifiées dans la présente de « type d'affichage ») comprenant, par exemple, un affichage à cristaux liquides (LCD), un affichage à plasma, un affichage à tube cathodique (CRT), un affichage à traitement numérique de la lumière (DLP), et un affichage réflecteur à cristal sur silicium (SXRD). Cependant, il peut exister des différences significatives entre des technologies d'affichage différentes, ainsi qu'entre deux représentants de la même technologie d'affichage. Par exemple, deux ensembles d'affichages à cristaux liquides peuvent être équipés avec des ensembles différents de sources lumineuses. Un de ces ensembles de sources lumineuses peut être constitué de lampes fluorescentes à cathode froide (CCFL), où la gamme chromatique dépend principalement des luminophores utilisés. Historiquement, ces sources lumineuses ne permettaient pas l'utilisation d'une gamme chromatique haute définition. En fait, les affichages qui utilisaient ces sources lumineuses ne pouvaient pas reproduire toutes les 709 couleurs, selon la norme de 709 couleurs de l'Union internationale des télécommunications (ITU) pour la haute définition. Cependant, des développements récents ont amené des produits sur le marché qui utilisent des dites lampes fluorescentes à cathode froide à gamme étendue (W-CCFL), où la gamme chromatique est encore plus importante que la gamme de 709 couleurs. Un autre composant de la technologie d'affichage à cristaux liquides est constitué de filtres colorés, qui pourraient être conçus pour avoir une sortie lumineuse élevée et, donc, une efficacité lumineuse élevée avec une gamme chromatique étroite, ou pourraient être conçus pour avoir une efficacité lumineuse luminescente et une gamme chromatique élargie. Une autre tendance est que des unités de rétroéclairage (BLU) CCFL d'un affichage LCD soient remplacées par des BLU à LED (diodes électroluminescentes) RGB avec une gamme chromatique encore plus élevée.

Des affichages à traitement numérique de la lumière et des affichages réflecteurs à cristal sur silicium (comprenant la projection arrière) sont des affichages réflecteurs qui filtrent la lumière provenant d'une source lumineuse. Actuellement, il existe des techniques différentes pour augmenter la gamme chromatique de ces dispositifs. En fait, à partir de maintenant, certains des affichages employant ces techniques différentes ont déjà une gamme chromatique augmentée par comparaison à la gamme chromatique de référence applicable actuelle.

Avec l'arrivée des affichages à gamme étendue, il est devenu possible d'afficher une plage de couleurs élargie qui n'était possible précédemment. Les contenus vidéo actuels sur des disques vidéo numériques (DVD), des programmes de télévision et/ou par l'intermédiaire de la vidéo sur le protocole Internet (VOIP) sont codés dans un espace colorimétrique avec une gamme chromatique de référence et, donc, suivent les règles qui ont été définies il y a plusieurs années lorsque l'affichage de gamme chromatique étendue n'était pas faisable. En fait, jusqu'à récemment il était difficile d'obtenir une reproduction même de la gamme chromatique de référence actuelle.

Comme il apparaît aujourd'hui, la situation a changé. Une gamme chromatique étendue est faisable et il existe un souhait d'utiliser la gamme chromatique élargie. Cependant, au lieu de choisir un autre ensemble de couleurs primaires de gamme chromatique étendue, la tendance actuelle qui semblait être préférée est l'utilisation de normes chromatiques ouvertes, non restrictives. Un exemple d'une telle norme est XYZ pour le cinéma numérique ou xvYCC (IEC 61966-2-3) pour la télévision grand public. D'autres exemples comprennent, par exemple, sYCC (Commission internationale électrotechnique (IEC) 61966-2-1), ITU-R BT.1361, ou e-sRGB (Association des fabricants d'imagerie et de photographie (PIMA) 7667) pour les graphiques informatiques et la photographie d'images fixes.

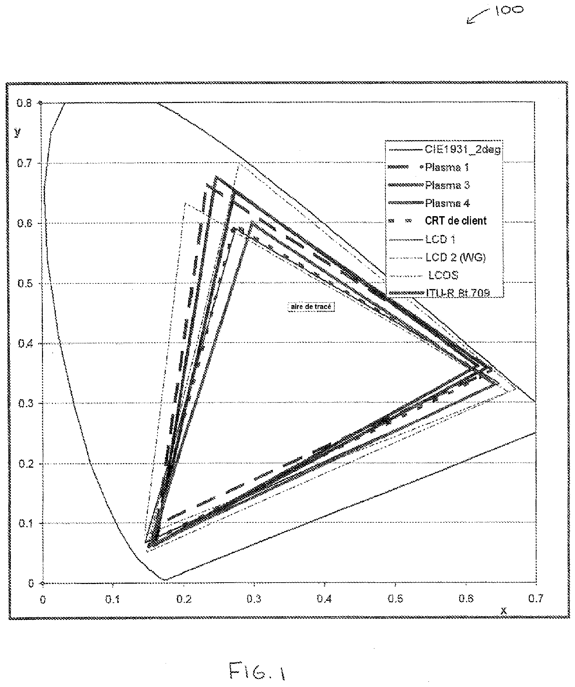

Au même moment, il existe une variation significative dans les gammes chromatiques utilisées dans les divers affichages disponibles actuellement. Jusqu'à récemment, la gamme chromatique a été déterminée plus ou moins par les luminophores de tube cathodique standard. Aujourd'hui, la plage de couleurs susceptible d'être affichée dépend de la technologie d'affichage utilisée et de la conception du matériel, comme décrit ci-dessus. En référence à la figure 1, des mesures de gamme chromatique des affichages disponibles actuellement sont indiquées généralement par le numéro de référence 100. Comme il est évident, il existe actuellement une quantité significative de différences entre les mesures de gammes chromatiques disponibles actuelles 100. Il doit être noté qu'aucune des gammes chromatiques des divers affichages disponibles n'est égale à la gamme chromatique de référence du matériau source qui, dans cet exemple, correspond à ITU-R Bt. 709. Par rapport à la figure 1, l'affichage avec la gamme chromatique la plus large était un affichage à cristaux liquides sur silicium (LCOS) en cours d'essai, avec un vert jaunissant, et un affichage à cristaux liquides (LCD) avec un rétroéclairage de gamme étendue avec un vert cyanique.

De plus, des affichages actuels semblent remplacer simplement les couleurs primaires de référence spécifiées par la norme applicable par les couleurs primaires correspondant à l'affichage respectif (par exemple, un type d'affichage respectif, une gamme chromatique respective mise en oeuvre sur cet affichage, et ainsi de suite), similaires au passé et l'utilisation de luminophores de tube cathodique différents. En conséquence, des couleurs n'apparaissent pas comme elles devraient. Autrement dit, des couleurs apparaissent différemment de ce qui était prévu pour leur apparence. Par exemple, des sapins ressemblent à des pins, des tomates ressemblent à des oranges, et ainsi de suite. Cependant le mappage des couleurs primaires est la solution la plus primitive et la moins chère de mappage de gamme.

Dans le cas d'un matériau de gamme étendue sur un affichage de gamme étendue, il existe encore un problème où des couleurs peuvent être affichées incorrectement en raison de la gamme chromatique du matériau de gamme étendue qui est différente de la gamme chromatique de l'affichage à gamme étendue. En fait, en utilisant les normes chromatiques non restrictives mentionnées ci-dessus comme xvYCC ou XYZ, il est toujours possible qu'une couleur soit transmise qui ne peut pas être affichée sur un ou plusieurs affichages particuliers à gamme étendue.

Un procédé pour une correction chromatique implique le matriçage 3x3 des couleurs primaires sources sur les couleurs primaires de l'affichage (qui, cependant, demande une linéarisation préalable du signal vidéo). Cette solution présente des problèmes lorsque des couleurs sont transmises qui sont au-delà de la gamme chromatique de la gamme chromatique de l'affichage. En guise d'exemple, considérons un affichage avec trois couleurs primaires de rouge, vert et bleu, où la couleur à afficher peut être une couleur verte (par exemple, une variation de la couleur primaire verte), et que cette couleur peut être en dehors de la plage d'affichage. Le résultat typique d'une telle situation est que la couleur à afficher peut être découpée sur ses plages maximales respectives. Le problème se manifestera par une reproduction chromatique erronée, par une erreur de teinte, de saturation et également de luminosité. L'effet néfaste sera encore pire si la couleur apparaît dans une gradation (par exemple, comme constaté le plus souvent dans des films d'animation), lorsqu'un contour erroné apparaît également. Un contour erroné est l'apparition d'une structure ou d'un objet erroné(e) sur l'image à la suite d'artefacts dans le traitement du signal vidéo ou dans l'affichage.

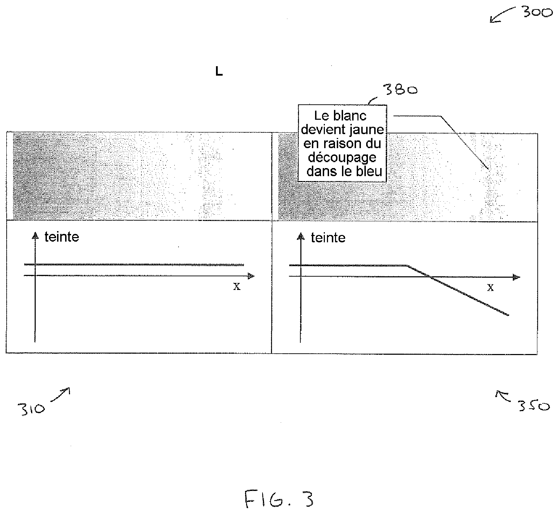

Considérons un autre exemple, comme suit. Une couleur blanche « cyanisante » est définie comme suit : bleu = max ; rouge = 0,8*max ; et vert = max ; sur un affichage de gamme étendue, où « max » représente la valeur permissible maximale. Sur un affichage de gamme étroite qui a un bleu moins saturé, ceci aboutira à un découpage du bleu, et le blanc deviendra verdâtre. Ce problème est illustré sur la figure 3. En référence à la figure 3, un changement de teinte sur une gradation blanche bleuissante due à une restriction de gamme chromatique est indiqué généralement par le numéro de référence 300. En particulier, le résultat souhaité est représenté sur la partie gauche de la figure 3 et est désignée par le numéro de référence 310, tandis que le résultat réel est représenté sur la partie droite de la figure 3 et est désignée par le numéro de référence 350. Comme indiqué par le numéro de référence 380 et le texte correspondant, le blanc devient jaune en raison du découpage dans le bleu.

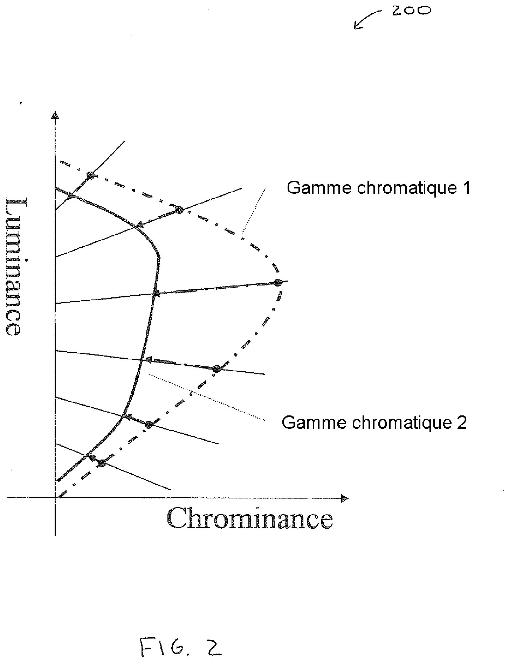

Il est par conséquent essentiel qu'une solution adéquate de mappage de gamme chromatique soit utilisée pour rendre des couleurs sur l'affichage utilisé. En référence à la figure 2, un mappage de gamme chromatique exemple est indiqué généralement par le numéro de référence 200. La figure 2 représente une « gamme chromatique 1 » et une « gamme chromatique 2 » comme une section transversale, où la « gamme chromatique 1 » est mappée dans la « gamme chromatique 2 » au moyen d'un mappage de gamme chromatique. Dans le mappage de gamme chromatique 100, la variation dans la luminance est représentée par rapport à l'axe vertical (généralement indiqué par l'axe Y), et la variance dans la chrominance est représentée par rapport à l'axe horizontal (généralement indiqué par l'axe X). L'exemple fourni est pour une « gamme chromatique 2 » inférieure à la « gamme chromatique 1 ». Cependant, il faut être conscient que le cas opposé est également possible, où la « gamme chromatique 2 » est supérieure à la « gamme chromatique 1 ».

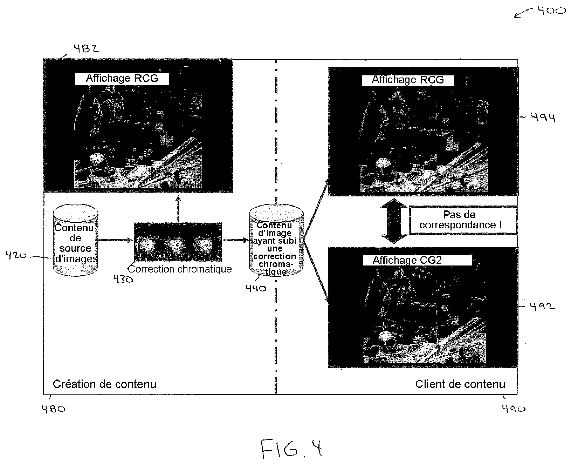

En référence à la figure 4, un diagramme de haut niveau exemplaire représentant le flux de production pour une correction chromatique à l'aide d'un affichage ayant une gamme chromatique de référence pour un contenu qui peut être affiché ultérieurement sur un affichage avec une gamme chromatique différente de la gamme chromatique de référence est indiqué généralement par le numéro de référence 400.

Le résultat indésirable du flux de production de correction chromatique 400 de la figure 4 est que lors d'une correction chromatique sur un affichage avec un affichage chromatique de référence (RCG), les couleurs sur un affichage avec une seconde gamme chromatique ou la gamme chromatique 2 (CG2) seront reproduites incorrectement.

Le flux de production de correction chromatique 400 implique un côté de création de contenu 480 et un côté de consommation de contenu 490. Un affichage RCG 482 est utilisé sur le côté de création de contenu 480. Un affichage RCG 492 et un affichage CG2 494 sont utilisés sur le côté de consommation de contenu 590.

Le contenu de source d'images peut être stocké, par exemple, dans un magasin de contenu de source d'images 420. Le contenu d'image ayant subi une correction chromatique peut être stocké, par exemple, dans un magasin de contenu d'image ayant subi une correction chromatique 440.

Un module de correction chromatique 430 génère le contenu qui apparaît correct seulement sur un affichage du même type et avec la même gamme chromatique. Ainsi, les couleurs sur l'affichage CG2 n'apparaîtront pas les mêmes que les couleurs qui ont été corrigées chromatiquement sur l'affichage RCG. Il est très probable qu'au moins certaines des couleurs sur l'affichage RCG2 seront découpées et au moins certaines seront affichées avec la teinte erronée.

Le problème est illustré sur la figure 4 à l'aide de « l'image de ski », qui fait partie des images d'essai CIE-TC8-03 dans leurs « Guidelines for the Evaluation of Gamut Mapping Algorithms ». Avec l'aimable autorisation de Fujifilm Electronic Imaging Ltd. (UK). Comme nous pouvons le constater, sur le côté du consommation de contenu, l'image peut être récupérée correctement seulement sur un affichage avec RCG. L'image apparaîtra incorrecte et présentera les artefacts mentionnés ci-dessus si un affichage avec une gamme chromatique non égale à RCG (CG2) est utilisée pour l'affichage.

Ces inconvénients et ces désavantages et d'autres de l'art antérieur sont traités par les présents principes, qui concerne des procédés et des systèmes pour une correction chromatique afin d'obtenir des résultats prévisibles sur des affichages avec des gammes chromatiques différentes.

Selon un aspect des présents principes, il est proposé un procédé pour une correction chromatique. Le procédé comprend la réalisation d'une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence. Le procédé comprend en outre la détermination d'un premier ensemble de métadonnées définissant une description de mappage de gamme chromatique pour un mappage de gamme chromatique depuis un affichage de type non-référence ayant une gamme chromatique de non-référence vers l'affichage de type référence. Le procédé comprend également la réalisation d'une correction chromatique ultérieure à l'aide de l'affichage de type non-référence et du contenu d'image re-formé ayant subi une correction chromatique pour créer un second ensemble de métadonnées concernant des affichages de type non-référence ayant la gamme chromatique de non-référence. Le procédé comprend de plus la génération d'un ensemble final de métadonnées à partir du premier ensemble de métadonnées et du second ensemble de métadonnées, pour une transformation chromatique ultérieure qui transforme chromatiquement le contenu d'image re-formé ayant subi une correction chromatique pour l'affichage sur des affichages de type non-référence pour la consommation des clients. Le contenu d'image source est re-formé pour la consommation des clients seulement pour les affichages de type référence ayant la gamme chromatique de référence.

Selon un autre aspect des présents principes, il est proposé un procédé pour une correction chromatique. Le procédé comprend la réalisation d'une correction chromatique initiale sur un contenu d'image source à l'aide d'un affichage de type non-référence ayant une gamme chromatique de non-référence pour obtenir un contenu d'image re-formé ayant subi une correction chromatique pour l'affichage sur des affichages de type non-référence ayant la gamme chromatique de non-référence et obtenir des données de correction chromatique initiale concernant des affichages de type référence ayant une gamme chromatique de référence. Le procédé comprend en outre la réalisation d'un mappage de gamme chromatique à l'aide des données de correction chromatique initiale et du contenu d'image re-formé ayant subi une correction chromatique pour modifier le contenu d'image re-formé ayant subi une correction chromatique pour l'affichage sur un affichage de type référence ayant la gamme chromatique de référence. Le procédé comprend également la réalisation d'une correction chromatique ultérieure à l'aide de l'affichage de type référence ayant la gamme chromatique de référence et du contenu d'image re-formé ayant subi une correction chromatique modifié pour obtenir un contenu d'image re-formé ayant subi une correction chromatique pour l'affichage sur les affichages de type référence ayant la gamme chromatique de référence.

Selon encore un autre aspect des présents principes, il est proposé un procédé pour une correction chromatique. Le procédé comprend la réalisation d'une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence. Le procédé comprend en outre la réalisation d'une correction chromatique ultérieure à l'aide d'un affichage de type non-référence ayant une gamme chromatique de non-référence et du contenu d'image re-formé ayant subi une correction chromatique pour créer un premier ensemble de métadonnées concernant des affichages de type non-référence ayant la gamme chromatique de non-référence. Le procédé comprend également la détermination d'un second ensemble de métadonnées définissant une description de mappage de gamme chromatique depuis un affichage de type non-référence vers l'affichage de type référence. Le procédé comprend de plus la génération d'un ensemble final de métadonnées à partir du premier ensemble de métadonnées et du second ensemble de métadonnées, pour une transformation chromatique ultérieure qui transforme chromatiquement le contenu d'image re-formé ayant subi une correction chromatique pour l'affichage sur des affichages de type non-référence pour la consommation des clients. Le contenu d'image source est re-formé pour la consommation des clients seulement pour les affichages de type référence ayant la gamme chromatique de référence.

Selon toujours un autre aspect des présents principes, il est proposé un procédé pour une correction chromatique. Le procédé comprend la réalisation d'une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence. Le procédé comprend en outre la réalisation d'une correction chromatique ultérieure à l'aide d'un affichage de type non-référence ayant la gamme chromatique de non-référence et du contenu d'image re-formé ayant subi une correction chromatique pour l'affichage sur les affichages de type référence ayant la gamme chromatique de référence pour obtenir des données de correction chromatique ultérieure. Le procédé comprend également la réalisation d'un mappage de gamme chromatique à l'aide des données de correction chromatique ultérieure et du contenu d'image re-formé ayant subi une correction chromatique pour l'affichage sur des affichages de type référence ayant la gamme chromatique de référence pour obtenir un contenu d'image re-formé ayant subi une correction chromatique pour l'affichage sur des affichages de type non-référence ayant la gamme chromatique de non-référence.

Selon un aspect supplémentaire des présents principes, il est proposé un système pour une correction chromatique. Le système comprend un module de correction chromatique pour réaliser une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence. Le système comprend en outre un module de mappage de gamme chromatique pour réaliser un mappage de gamme chromatique pour générer un premier ensemble de métadonnées définissant une description de mappage de gamme chromatique pour un mappage de gamme chromatique depuis un affichage de type non-référence ayant une gamme chromatique de non-référence vers l'affichage de type référence. Le système comprend également un module de correction chromatique ultérieure pour réaliser une correction chromatique ultérieure à l'aide de l'affichage de type non-référence et du contenu d'image re-formé ayant subi une correction chromatique pour créer un second ensemble de métadonnées concernant des affichages de type non-référence ayant la gamme chromatique de non-référence. Le système comprend de plus un générateur de métadonnées d'ensemble final pour générer un ensemble final de métadonnées à partir du premier ensemble de métadonnées et du second ensemble de métadonnées, pour une transformation chromatique ultérieure qui transforme chromatiquement le contenu d'image re-formé ayant subi une correction chromatique pour l'affichage sur des affichages de type non-référence pour la consommation des clients. Le contenu d'image source est re-formé pour la consommation des clients seulement pour les affichages de type référence ayant la gamme chromatique de référence.

Selon un aspect toujours supplémentaire des présents principes, il est proposé un système pour une correction chromatique. Le système comprend un module de correction chromatique pour réaliser une correction chromatique initiale sur un contenu d'image source à l'aide d'un affichage de type non-référence ayant une gamme chromatique de non-référence pour obtenir un contenu d'image re-formé ayant subi une correction chromatique pour l'affichage sur des affichages de type non-référence ayant la gamme chromatique de non-référence et obtenir des données de correction chromatique initiale concernant des affichages de type référence ayant une gamme chromatique de référence. Le système comprend en outre un module de mappage de gamme chromatique pour réaliser un mappage de gamme chromatique à l'aide des données de correction chromatique initiale et du contenu d'image re-formé ayant subi une correction chromatique pour modifier le contenu d'image re-formé ayant subi une correction chromatique pour l'affichage sur un affichage de type référence ayant la gamme chromatique de référence. Le système comprend également un module de correction chromatique ultérieure pour réaliser une correction chromatique ultérieure à l'aide de l'affichage de type référence ayant la gamme chromatique de référence et du contenu d'image re-formé ayant subi une correction chromatique modifié pour obtenir un contenu d'image re-formé ayant subi une correction chromatique pour l'affichage sur les affichages de type référence ayant la gamme chromatique de référence.

Selon un aspect encore supplémentaire des présents principes, il est proposé un système pour une correction chromatique. Le système comprend un module de correction chromatique pour réaliser une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence. Le système comprend en outre un module de correction chromatique ultérieure pour réaliser une correction chromatique ultérieure à l'aide d'un affichage de type non-référence ayant une gamme chromatique de non-référence et du contenu d'image re-formé ayant subi une correction chromatique pour créer un premier ensemble de métadonnées concernant des affichages de type non-référence ayant la gamme chromatique de non-référence. Le système comprend également un module de mappage de gamme chromatique pour réaliser un mappage de gamme chromatique pour générer un second ensemble de métadonnées définissant une description de mappage de gamme chromatique depuis un affichage de type non-référence vers l'affichage de type référence. Le système comprend de plus un générateur de métadonnées d'ensemble final pour générer un ensemble final de métadonnées à partir du premier ensemble de métadonnées et du second ensemble de métadonnées, pour une transformation chromatique ultérieure qui transforme chromatiquement le contenu d'image re-formé ayant subi une correction chromatique pour l'affichage sur des affichages de type non-référence pour la consommation des clients. Le contenu d'image source est re-formé pour la consommation des clients seulement pour les affichages de type référence ayant la gamme chromatique de référence.

Selon un aspect additionnel des présents principes, il est proposé un système pour une correction chromatique. Le système comprend un module de correction chromatique pour réaliser une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence. Le système comprend en outre un module de correction chromatique ultérieure pour réaliser une correction chromatique ultérieure à l'aide d'un affichage de type non-référence ayant une gamme chromatique de non-référence et du contenu d'image re-formé ayant subi une correction chromatique pour l'affichage sur les affichages de type référence ayant la gamme chromatique de référence pour obtenir des données de correction chromatique ultérieure. Le système comprend également un module de mappage de gamme chromatique pour réaliser un mappage de gamme chromatique à l'aide des données de correction chromatique ultérieure et du contenu d'image re-formé ayant subi une correction chromatique pour l'affichage sur des affichages de type référence ayant la gamme chromatique de référence pour obtenir un contenu d'image re-formé ayant subi une correction chromatique pour l'affichage sur des affichages de type non-référence ayant la gamme chromatique de non-référence.

Ces aspects, ces fonctionnalités et ces avantages et d'autres des présents principes découleront de la description détaillée suivante de modes de réalisation exemplaires, qui doit être lue en liaison avec les dessins d'accompagnement.

Les présents principes peuvent être mieux compris en accord avec les figures exemplaires suivantes, sur lesquelles :
la figure 1 est un diagramme représentant des mesures de gamme chromatique d'affichages disponibles actuellement, selon l'art antérieur ;
la figure 2 est un diagramme représentant un mappage de gamme chromatique exemple, selon l'art antérieur ;
la figure 3 est un diagramme représentant un changement de teinte sur une gradation blanche bleuissante en raison d'une restriction de gamme chromatique, selon l'art antérieur ;
la figure 4 est un diagramme de haut niveau représentant le exemple de flux de production pour une correction chromatique à l'aide d'un affichage ayant une gamme chromatique de référence pour un contenu qui peut être affiché ultérieurement sur un affichage avec une gamme chromatique différente de la gamme chromatique de référence, selon l'art antérieur ;
la figure 5 est un diagramme de haut niveau représentant le exemple de flux de production pour une correction chromatique afin d'obtenir un maître pour des affichages RCG et des métadonnées pour des affichages CG2, selon un mode de réalisation des présents principes ;
la figure 6 est un diagramme de haut niveau représentant le exemple de flux de production pour une correction chromatique afin d'obtenir un maître pour des affichages RCG et un maître pour des affichages CG2, selon un mode de réalisation des présents principes ;
la figure 7 est un diagramme représentant un exemple d'une combinaison pour obtenir une transformation chromatique de sortie, selon un mode de réalisation des présents principes ;
la figure 8 est un diagramme de haut niveau représentant un autre exemple de flux de production pour une correction chromatique afin d'obtenir un maître pour des affichages RCG et des métadonnées pour des affichages CG2, selon un mode de réalisation des présents principes ; et
la figure 9 est un diagramme de haut niveau représentant un autre exemple de flux de production pour une correction chromatique afin d'obtenir un maître pour des affichages RCG et un maître pour des affichages CG2, selon un mode de réalisation des présents principes.

Les présents principes concernent des procédés et des systèmes pour une correction chromatique afin d'obtenir des résultats prévisibles sur des affichages avec des gammes chromatiques différentes.

La présente description illustre les présents principes. Il faudra donc être conscient que l'homme du métier sera en mesure d'imaginer divers agencements qui, bien que non explicitement décrits ou représentés dans la présente, incorporent les présents principes et sont compris dans sa portée.

Tous les exemples et le langage conditionnel exposés dans la présente sont destinés à des besoins pédagogiques pour aider le lecteur dans la compréhension des présents principes et des concepts apportés par l'inventeur ou les inventeurs à l'avancée de l'art, et doivent être interprétés comme étant sans limitation sur ces exemples et ces conditions exposés spécifiquement.

De plus, tous les énoncés dans la présente exposant des principes, des aspects et des modes de réalisation des présents principes, ainsi que des exemples spécifiques de ceux-ci, sont destinés à englober des équivalents de ceux-ci à la fois structurels et fonctionnels. De plus, il est envisagé que ces équivalents comprennent à la fois des équivalents connus actuellement ainsi que des équivalents développés dans le futur, c'est-à-dire, des éléments quelconques développés qui réalisent la même fonction, indépendamment de la structure.

Ainsi, par exemple, il apparaîtra à l'homme du métier que les schémas de principe exposés dans la présente représentent des vues conceptuelles d'une circuiterie explicative incorporant les présents principes. De même, il apparaîtra que des organigrammes, des diagrammes de flux, des diagrammes de transition d'état quelconques, un pseudocode quelconque et similaires représentent divers processus qui peuvent être représentés pratiquement dans un support lisible par un ordinateur et donc exécutés par un ordinateur ou un processeur, que cet ordinateur ou ce processeur soit représenté explicitement ou non.

Les fonctions des divers éléments représentés sur les figures peuvent être produites grâce à l'utilisation d'un matériel dédié ainsi qu'à un matériel susceptible d'exécuter un logiciel en association avec un logiciel approprié. En cas de production par un processeur, les fonctions peuvent être produites par un processeur dédié unique, par un processeur partagé unique ou par une pluralité de processeurs individuels, dont certains peuvent être partagés. De plus, l'utilisation explicite du terme « processeur » ou « contrôleur » ne doit pas être interprétée comme se référant exclusivement à un matériel susceptible d'exécuter un logiciel, et peut comprendre implicitement, sans limitation, un matériel de processeur de signal numérique (« DSP »), une mémoire morte (« ROM ») pour stocker un logiciel, une mémoire vive (« RAM ») et un stockage non volatile.

D'autres matériels, conventionnels et/ou personnalisés, peuvent également être inclus. De même, des commutateurs quelconques représentés sur les figures sont seulement conceptuels. Leur fonction peut être réalisée grâce au fonctionnement d'une logique de programme, grâce à une logique dédiée, grâce à l'interaction d'une commande de programme et d'une logique dédiée, ou même manuellement, la technique particulière étant sélectionnable par le réalisateur comme il sera compris plus spécifiquement à partir du contexte.

Dans les revendications de ceux-ci, un élément quelconque exprimé comme un moyen pour réaliser une fonction spécifique est destiné à englober toute manière de réalisation de cette fonction comprenant, par exemple, a) une combinaison d'éléments de circuit qui réalise cette fonction ou b) un logiciel d'une forme quelconque, comprenant donc, un micrologiciel, un microcode ou similaire, combiné à une circuiterie appropriée pour exécuter ce logiciel afin de réaliser la fonction. Les présents principes tels que définis par ces revendications résident dans le fait que les fonctionnalités produites par les divers moyens exposés sont combinées et rassemblées de la manière demandée par les revendications. Il est donc considéré que des moyens quelconques qui peuvent obtenir ces fonctionnalités sont équivalents à ceux représentés dans la présente.

La référence dans la description à « un seul mode de réalisation » ou « un mode de réalisation » des présents principes signifie qu'une fonctionnalité, une structure, une caractéristique particulières et ainsi de suite décrites en liaison avec le mode de réalisation est comprise dans au moins un mode de réalisation unique des présents principes. Ainsi, les apparitions de l'expression « dans un seul mode de réalisation » ou « dans un mode de réalisation » apparaissant en divers endroits dans la description ne font pas toute référence au même mode de réalisation.

Comme utilisé dans la présente, l'acronyme « CG » indique une « gamme chromatique », l'acronyme « CGM » indique un « mappage de gamme chromatique », l'acronyme « RCG » indique une « gamme chromatique de référence » et l'acronyme « CG2 » indique une « gamme chromatique 2 ».

Également, comme utilisé dans la présente, l'expression « affichages RCG » fait référence à des affichages ayant un type de gamme indiqué comme une gamme chromatique de référence (RCG), tandis que l'expression « affichages CG2 » fait référence à des affichages ayant un type de gamme indiqué comme une seconde gamme chromatique, la seconde gamme chromatique étant différente de la gamme chromatique de référence.

Il faut être conscient que tandis que la description fournie dans la présente est pratiquement décrite relativement, par exemple, à une version d'image pour des affichages RCG, et une version d'image pour des affichages CG2, ou des métadonnées pour reconstruire l'image pour des affichages CG2, étant donné la variété des affichages de client disponibles, plus d'une version CG2 peut être générée, tout en conservant l'esprit des présents principes.

De plus, comme utilisée dans la présente, l'expression « gamme chromatique 709 » et des variations de celle-ci indiquent 709 couleurs qui, à leur tour, indiquent le cube chromatique défini par les trois couleurs primaires de luminophores et le point blanc défini dans ITU-R Bt.709.

Également, comme utilisée dans la présente, relativement à la transmission et la réception de métadonnées, l'expression « intra-bande » fait référence à la transmission et/ou la réception de ces métadonnées en même temps que le contenu d'image ayant subi une correction chromatique à afficher par un dispositif de consommation. En revanche, l'expression « hors-bande » fait référence à la transmission et/ou la réception des métadonnées séparément relativement au contenu d'image ayant subi une correction chromatique à afficher par un dispositif de consommation.

En outre, comme utilisées dans la présente, les expressions « correction chromatique » et « gradation chromatique » font référence de manière interchangeable au processus créatif pendant la post-production pour ajuster les couleurs de sorte que l'image exprime l'intention créative.

De plus, comme utilisée dans la présente, l'expression « maître » fait référence à un contenu d'affichage re-formé, où le contenu d'affichage est re-formé pour une gamme chromatique particulière telle que, par exemple, RCG ou CG2.

Également, comme utilisé dans la présente, le terme « métadonnées » fait référence à des données telles que, par exemple, des valeurs entières, des valeurs non entières et/ou des valeurs booléennes, utilisées pour commander, démarrer ou arrêter des mécanismes de traitement chromatique, et modifier la fonctionnalité de ceux-ci. En outre, des métadonnées peuvent comprendre une description d'une table de mappage.

Par exemple, dans un mode de réalisation, une table de mappage chromatique pourrait être réalisée au moyen d'une 3-D LUT (table de consultation tridimensionnelle). Cette LUT est utilisé pour recevoir trois valeurs d'entrée, chaque valeur représentant un composant chromatique, rouge, vert ou bleu, et produisant un triplet prédéfini de valeurs de sortie, par exemple, rouge, vert et bleu, pour chaque triplet d'entrée rouge, vert et bleu individuel. Dans ce cas, les métadonnées de la création de contenu au client devraient alors comprendre une description de LUT.

Un autre mode de réalisation peut impliquer la description d'une fonction de mappage telle que, par exemple, une circuiterie et/ou ainsi de suite pour réaliser un « GOG » (gain, décalage, Gamma), qui est défini comme suit :
Vsortie = Gain*(décalage + Ventrée)^Gamma, pour chaque composant chromatique.

Dans ce cas, les métadonnées devraient comprendre 9 valeurs, un ensemble de gain, décalage et Gamma pour chacun des trois composants chromatiques.

Bien entendu, les présents principes ne sont pas limités aux mode s de réalisation précédents et, étant donné les enseignements des présents principes fournis dans la présente, d'autres modes de réalisation impliquant d'autres mises en oeuvre de métadonnées sont facilement envisagées par l'homme du métier dans cet art et les arts connexes, tout en conservant l'esprit des présents principes.

De plus, comme utilisée dans la présente, l'expression « correction chromatique » fait référence à une procédure créative pour choisir manuellement les couleurs correctes (préférées) sur le côté de création de contenu (par opposition au côté de consommation du client). En conséquence, l'expression « module de correction chromatique » et les expressions similaires font référence à la structure nécessaire pour un coloriste afin de corriger manuellement ces couleurs. Ainsi, une telle structure peut impliquer une interface présentée au coloriste telle qu'une interface utilisateur graphique (GUI), des moyens de sélection pour permettre au coloriste de faire des sélections concernant, par exemple, des couleurs à remplacer et/ou modifier, et des moyens de mise en oeuvre pour mettre en oeuvre les sélections faites par le coloriste. Les moyens de sélection peuvent comprendre un ou plusieurs parmi les suivants : un clavier ; un pavé ; une souris ; des boutons ; des commutateurs ; et ainsi de suite.

Comme noté ci-dessus, les présents principes concernent un procédé et un système pour une correction chromatique afin d'obtenir des résultats prévisibles sur des affichages avec des gammes chromatiques différentes. Les présents principes corrigent des différences sur des couleurs entre des affichages cibles différents. Il faut être conscient que les présents principes concernent un contenu actuel (par exemple, des types et des technologies de codage) et des affichages actuels (par exemple, des types d'affichage, et des différences entre ceux-ci, ainsi que des types d'affichage différents, provenant, par exemple, d'un matériel, d'un logiciel et ainsi de suite) ainsi qu'un contenu et des affichages futurs, lorsqu'ils sont liés à l'utilisation de gammes chromatiques différentes.

Dans un mode de réalisation, les présents principes peuvent être utilisés pour traiter un problème exemplaire où une correction chromatique doit être réalisée sur un affichage avec une gamme chromatique de référence, cependant, les couleurs corrigées doivent être affichées sur un affichage avec une gamme chromatique différente de la gamme chromatique de référence utilisée pour la correction chromatique.

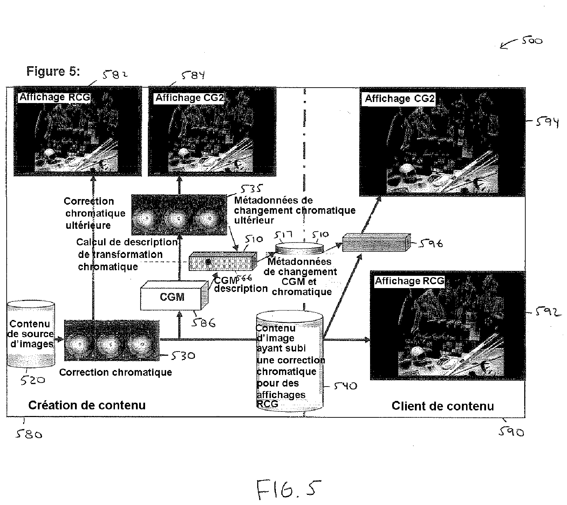

En référence à la figure 5, un diagramme de haut niveau représentant le exemple de flux de production pour une correction chromatique afin d'obtenir un maître pour des affichages RCG et des métadonnées pour des affichages CG2 est indiqué généralement par le numéro de référence 500.

Il faut être conscient que certaines approches de l'art antérieur sont pénalisées par le fait que des propriétés d'affichage des affichages différents ne sont pas exploitées, à savoir les couleurs ne sont probablement pas aussi saturés qu'elles pourraient l'être sur un affichage CG2 en raison de restrictions de l'affichage RCG et vice versa.

Pour surmonter ce problème, un mode de réalisation des présents principes propose une correction chromatique à deux étapes. Le flux de production de correction chromatique 500 implique un côté de création de contenu 580 et un côté de consommation de contenu 590. Un affichage RCG 582 et un affichage RCG 584 sont utilisés sur le côté de création de contenu 580. Un affichage RCG 592 et un affichage CG2 594 sont utilisés sur le côté de consommation de contenu 590. L'affichage RCG 582 peut être considéré comme étant l'affichage principal pour le côté de création de contenu 580 dans le mode de réalisation.

Dans une première étape, les couleurs sont corrigées pour l'affichage RCG 582, par le module de correction chromatique 530. Dans un processus de correction chromatique secondaire, réalisé par le module de correction chromatique 535, le coloriste a désormais la possibilité de rectifier les couleurs de manière à le laisser préserver l'intention artistique sur l'affichage CG2 584. Cette approche permet un degré plus important de liberté des différences régulées sur des couleurs entre les deux maîtres. En guise d'option, les deux affichages peuvent également être échangés, faisant une première correction chromatique sur un affichage CG2 584 et une seconde correction chromatique sur un affichage RCG 582. Entre la première correction chromatique 530 et la correction chromatique ultérieure 535, il existe une circuiterie de gamme chromatique 586 pour préparer le contenu pour l'affichage différent. Il doit être noté qu'il existe d'autres configurations possibles, par exemple, lorsque la circuiterie de gamme chromatique est située entre la correction chromatique ultérieure 535 et l'affichage CG2 584. Il est même possible de faire tout le mappage manuellement.

Le contenu de source d'images peut être stocké, par exemple, dans un magasin de contenu de source d'images 520. Le contenu d'image ayant subi une correction chromatique pour des affichages RCG peut être stocké, par exemple, dans un magasin de contenu d'image ayant subi une correction chromatique 540. Les métadonnées 510 peuvent être stockées, par exemple, dans un magasin de métadonnées 517.

Le maître pour les affichages RCG est généré pendant une correction chromatique initiale, par un module de correction chromatique initiale 530. Les métadonnées 510 décrivent une transformation de contenu. Les métadonnées 510, qui sont également qualifiées dans la présente de métadonnées combinées en raison de la méthodologie de leur formation, sont générées sur la base d'un mappage de gamme chromatique 586 impliquant une description de mappage de CG2 à RCG et des informations de correction chromatique ultérieure (également qualifiées dans la présente de métadonnées de changement chromatique ultérieur) provenant d'une correction chromatique ultérieure (réalisée par le module de correction chromatique 535) par rapport à la correction chromatique initiale (réalisée par le module de correction chromatique 530) à partir de laquelle le maître est généré. Les métadonnées combinées 510, formées par un générateur de métadonnées finales 566, sont fournies à un dispositif d'affichage de grande consommation (par exemple, un affichage CG2 594) qui est ensuite en mesure de reconstruire la version pour des affichages CG2 à partir de celles-ci.

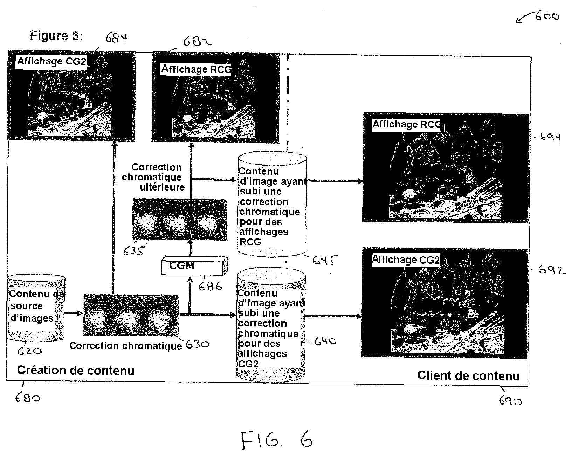

En référence à la figure 6, un diagramme de haut niveau représentant le exemple de flux de production pour une correction chromatique afin d'obtenir un maître pour des affichages RCG et un maître pour des affichages CG2 est indiqué généralement par le numéro de référence 600.

Dans un mode de réalisation, un maître est créé pour des affichages RCG, et une correction chromatique ultérieure est réalisée pour créer le maître secondaire pour des affichages CG2.

Le flux de production de correction chromatique 600 implique un côté de création de contenu 680 et un côté de consommation de contenu 690. Un affichage RCG 682 et un affichage RCG 684 sont utilisés sur le côté de création de contenu 680. Un affichage RCG 692 et un affichage CG2 694 sont utilisés sur le côté de consommation de contenu 6 90. L'affichage RCG 582 peut être considéré comme étant l'affichage principal pour le côté de création de contenu 580 dans le mode de réalisation.

Dans une première étape, les couleurs sont corrigées pour l'affichage RCG 682, par le module de correction chromatique 630. Dans un processus de correction chromatique secondaire, réalisé par le module de correction chromatique 635, le coloriste a désormais la possibilité de rectifier les couleurs de manière à le laisser préserver l'intention artistique sur l'affichage CG2. Cette approche permet un degré plus important de liberté des différences régulées sur des couleurs entre les deux maîtres. En guise d'option, les deux affichages peuvent également être échangés, faisant une première correction chromatique sur un affichage CG2 684 et une seconde correction chromatique sur un affichage RCG 682. Entre la première correction chromatique et la correction chromatique ultérieure, il existe une circuiterie de gamme chromatique pour préparer le contenu pour l'affichage différent. Il doit être noté qu'il existe d'autres configurations possibles, par exemple, lorsque la circuiterie de gamme chromatique est située entre la correction chromatique ultérieure et l'affichage CG2. Il est même possible de faire tout le mappage manuellement. Les deux versions sont ensuite stockées comme des maîtres séparés.

Le contenu de source d'images peut être stocké, par exemple, dans un magasin de contenu de source d'images 620. Le contenu d'image ayant subi une correction chromatique pour des affichages RCG peut être stocké, par exemple, dans un magasin de contenu d'image ayant subi une correction chromatique 645. Le contenu d'image ayant subi une correction chromatique pour des affichages CG2 peut être stocké, par exemple, dans un magasin de contenu d'image ayant subi une correction chromatique 640.

Il est préférable d'avoir un contenu et des métadonnées « mères » décrivant la transformation chromatique qui est nécessaire pour récupérer la version CG2 demandée, au lieu d'avoir des maîtres séparés pour des situations CG différentes. Sur le côté de consommation de contenu, une circuiterie sera fournie qui connecte la source de signal à un affichage CG2. Cette circuiterie peut être mise en oeuvre dans un matériel et/ou dans un logiciel, et fournit la transformation de signal pour générer la version CG2 demandée en dehors de l'image pour des affichages RCG. La description de transformation chromatique est fournie au moyen des métadonnées.

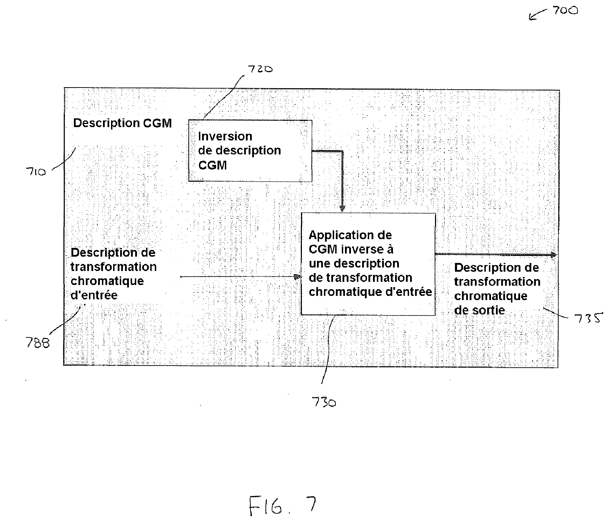

La description de transformation de signal comprend deux composants principaux, une description du changement chromatique pour la correction chromatique ultérieure, et une description d'un mappage CG2 (un inverse de la description de simulation CG2 utilisée pour une correction chromatique) (voir la figure 7).

En référence à la figure 7, une combinaison exemplaire pour obtenir une transformation chromatique de sortie est indiquée généralement par le numéro de référence 700.

Une description de mappage de gamme chromatique (CGM) 710 est entrée sur un module inverseur pour sortir une inversion de description de mappage de gamme chromatique (CGM) 720. L'inversion de description de mappage de gamme chromatique (CGM) 720 est entrée sur un module d'application 730 pour appliquer l'inversion de description de mappage de gamme chromatique (CGM) inverse 720 sur une description de transformation chromatique d'entrée 688 pour sortir une description de transformation chromatique 735.

Dans une application exemplaire, où les deux transformations sont réalisées sous forme de tables de consultation, la description de transformation chromatique résultante sera une table de consultation produite par l'inversion de la table de consultation qui a décrit la caractéristique CG utilisée pendant une correction chromatique. Cette table de consultation est ensuite concaténée à une table de consultation générée à partir de la transformation chromatique, la transformation de correction chromatique vient en premier puis le CGM de CG2.

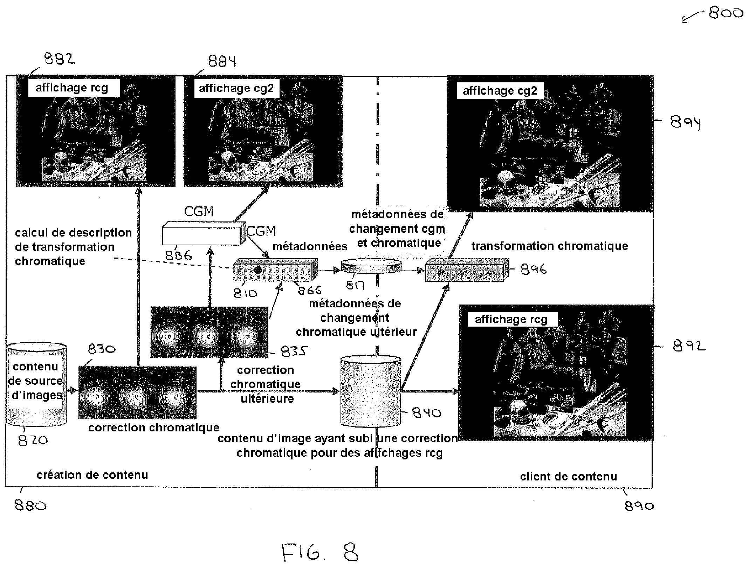

En référence à la figure 8, un diagramme de haut niveau représentant le exemple de flux de production pour une correction chromatique afin d'obtenir un maître pour des affichages RCG et des métadonnées pour des affichages CG2 est indiqué généralement par le numéro de référence 800.

Le flux de production de correction chromatique 800 implique un côté de création de contenu 580 et un côté de consommation de contenu 890. Un affichage RCG 882 et un affichage RCG 884 sont utilisés sur le côté de création de contenu 880. Un affichage RCG 892 et un affichage CG2 894 sont utilisés sur le côté de consommation de contenu 890. L'affichage RCG 882 peut être considéré comme étant l'affichage principal pour le côté de création de contenu 880 dans le mode de réalisation.

Le contenu de source d'images peut être stocké, par exemple, dans un magasin de contenu de source d'images 820. Le contenu d'image ayant subi une correction chromatique pour des affichages RCG peut être stocké, par exemple, dans un magasin de contenu d'image ayant subi une correction chromatique 840. Les métadonnées 810 peuvent être stockées, par exemple, dans un magasin de métadonnées 817.

Le maître pour les affichages RCG est généré pendant une correction chromatique initiale, par un module de correction chromatique initiale 830. Les métadonnées 810 décrivent une transformation de contenu. Les métadonnées 810, qui sont également qualifiées dans la présente de métadonnées combinées en raison de la méthodologie de leur formation, sont générées sur la base d'un mappage de gamme chromatique 886 impliquant la description de simulation CG2 et des informations de correction chromatique ultérieure (également qualifiées dans la présente de métadonnées de changement chromatique ultérieur) provenant d'une correction chromatique ultérieure (réalisée par le module de correction chromatique 835) par rapport à la correction chromatique initiale (réalisée par le module de correction chromatique 830) à partir de laquelle le maître est généré. Les métadonnées combinées 810, formées par un générateur de métadonnées finales 866, sont fournies à un dispositif d'affichage de client (par exemple, un affichage CG2 894) qui est ensuite en mesure de reconstruire la version pour des affichages CG2 à partir de celles-ci.

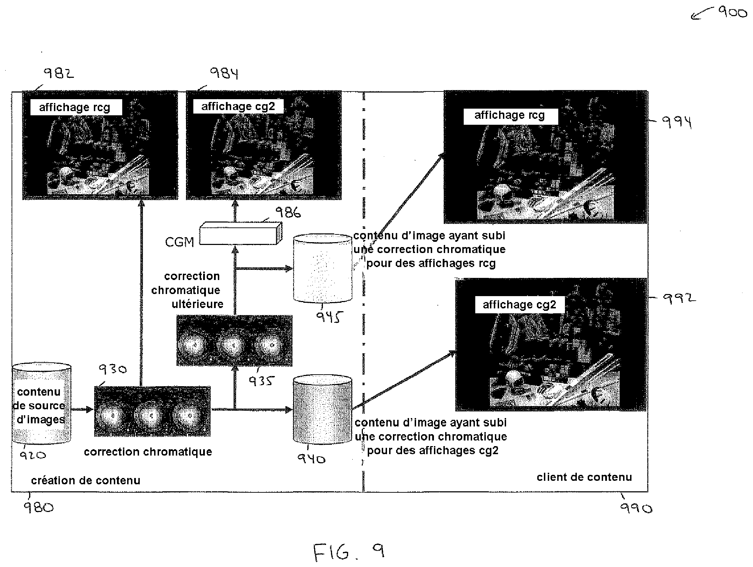

En référence à la figure 9, un diagramme de haut niveau représentant le exemple de flux de production pour une correction chromatique afin d'obtenir un maître pour des affichages RCG et un maître pour des affichages CG2 est indiqué généralement par le numéro de référence 900.

Dans un mode de réalisation, un maître est créé pour des affichages RCG, et une correction chromatique ultérieure est réalisée pour créer le maître secondaire pour des affichages CG2.

Le flux de production de correction chromatique 900 implique un côté de création de contenu 980 et un côté de consommation de contenu 990. Un affichage RCG 982 et un affichage RCG 984 sont utilisés sur le côté de création de contenu 980. Un affichage RCG 992 et un affichage CG2 994 sont utilisés sur le côté de consommation de contenu 990. L'affichage RCG 982 peut être considéré comme étant l'affichage principal pour le côté de création de contenu 980 dans le mode de réalisation.

Il faut être conscient que certaines approches de l'art antérieur sont pénalisées par le fait que des propriétés d'affichage des affichages différents ne sont pas exploitées, à savoir les couleurs ne sont probablement pas aussi saturées qu'elles pourraient l'être sur un affichage CG2 en raison de restrictions sur l'affichage RCG et vice versa.

Pour surmonter ce problème, un mode de réalisation des présents principes propose une correction chromatique à deux étapes. Dans une première étape, les couleurs sont corrigées pour l'affichage RCG 982, par le module de correction chromatique 930. Dans un processus de correction chromatique secondaire, réalisé par le module de correction chromatique 935, le coloriste a désormais la possibilité de rectifier les couleurs de manière à le laisser préserver l'intention artistique sur l'affichage CG2. Cependant, dans ce scénario, il est accepté que les deux versions de l'image ne correspondent pas. Les deux versions sont ensuite stockées comme des maîtres séparés.

Le contenu de source d'images peut être stocké, par exemple, dans un magasin de contenu de source d'images 920. Le contenu d'image ayant subi une correction chromatique pour des affichages RCG peut être stocké, par exemple, dans un magasin de contenu d'image ayant subi une correction chromatique 945. Le contenu d'image ayant subi une correction chromatique pour des affichages CG2 peut être stocké, par exemple, dans un magasin de contenu d'image ayant subi une correction chromatique 940.

Sur le côté de consommation de contenu, une circuiterie sera fournie qui connecte la source de signal à un affichage CG2. Cette circuiterie peut être mise en oeuvre dans un matériel et/ou dans un logiciel, et fournit la transformation de signal pour générer la version CG2 demandée en dehors de l'image pour des affichages RCG.

Ces fonctionnalités et ces avantages et d'autres des présents principes peuvent être facilement vérifiés par l'homme du métier sur la base des enseignements de la présente. Il doit être compris que les enseignements des présents principes peuvent être mis en oeuvre sous diverses formes de matériel, de logiciel, de micrologiciel, de processeurs spécialisés ou des combinaisons de ceux-ci.

Plus préférablement, les enseignements des présents principes seront mis en oeuvre comme une combinaison de matériel et de logiciel. De plus, le logiciel peut être mis en oeuvre comme un programme d'application incorporé de manière tangible dans une unité de stockage de programme. Le programme d'application peut être téléchargé sur une machine comprenant une architecture adéquate quelconque, et exécuté par celle-ci. De préférence, la machine est mise en oeuvre sur une plate-forme informatique ayant un matériel tel qu'une ou plusieurs unités centrales (« CPU »), une mémoire vive (« RAM ») et des interfaces d'entrée/sortie (« I/O »). La plate-forme informatique peut également comprendre un système d'exploitation et un code de micro-instructions. Les divers processus et les diverses fonctions décrites dans la présente peuvent faire partie soit du code de micro-instructions, soit du programme d'application, ou d'une combinaison quelconque de ceux-ci, qui peuvent être exécutés par une CPU. De plus, diverses autres unités périphériques peuvent être connectées à la plate-forme informatique telles qu'une unité de stockage de données additionnelle et une unité d'impression.

Il doit être compris en outre que, certains des composants et des procédés du système constitutif décrits sur les dessins d'accompagnement étant de préférence mis en oeuvre dans un logiciel, les connexions réelles entre les composants du système ou les blocs de fonctions de processus peuvent différer selon la manière de laquelle les présents principes sont programmés. Étant donné les enseignements dans la présente, l'homme du métier sera en mesure d'envisager ces mises en oeuvre ou ces configurations ou similaires des présents principes.

Bien que les modes de réalisation explicatifs aient été décrits dans la présente en faisant référence aux dessins d'accompagnement, il doit être compris que les présents principes ne sont pas limités à ces modes de réalisation précis, et que divers changements et diverses modifications peuvent être effectués dans ceux-ci par l'homme du métier sans s'écarter de la portée des présents principes. Tous ces changements et ces modifications sont destinés à être compris dans la portée des présents principes comme exposés dans les revendications annexées.

## Revendications

1. Procédé pour une correction chromatique, comprenant:
une étape de réalisation (530) d'une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence ;
**caractérisé en ce que** le procédé comprend en outre :
une étape de détermination (586) d'un premier ensemble de métadonnées définissant une description de mappage de gamme chromatique pour un mappage de gamme chromatique depuis un affichage de type non-référence ayant une gamme chromatique de non-référence vers l'affichage de type référence ;
une étape de réalisation (535) d'une correction chromatique ultérieure à l'aide de l'affichage de type non-référence et du contenu d'image re-formé ayant subi une correction chromatique pour créer un second ensemble de métadonnées concernant des affichages de type non-référence ayant la gamme chromatique de non-référence ;
une étape de génération (566) d'un ensemble final de métadonnées à partir du premier ensemble de métadonnées et du second ensemble de métadonnées, pour une transformation chromatique ultérieure qui transforme chromatiquement le contenu d'image re-formé ayant subi une correction chromatique pour l'affichage sur des affichages de type non-référence pour une consommation des clients,
dans lequel le contenu d'image source est re-formé pour la consommation des clients seulement pour les affichages de type référence ayant la gamme chromatique de référence.

2. Procédé selon la revendication 1, dans lequel au moins un parmi le premier ensemble de métadonnées, le second ensemble de métadonnées et l'ensemble final de métadonnées est représenté par des tables de consultation respectives.

3. Procédé selon la revendication 2, dans lequel la table de consultation représentant l'ensemble final de métadonnées est formée par la concaténation d'une version inversée de la table de consultation représentant le second ensemble de métadonnées et la table de consultation représentant le premier ensemble de métadonnées.

4. Procédé selon l'une quelconque des revendications 1 à 3, dans lequel lesdites étapes de réalisation, ladite étape de détermination et ladite étape de génération concernent une création du contenu d'affichage pour une consommation des clients ultérieure (590).

5. Procédé selon l'une quelconque des revendications 1 à 4, dans lequel l'ensemble final de métadonnées est fourni à un affichage de consommation final au moins un parmi l'intra-bande et le hors-bande par rapport au contenu d'affichage re-formé.

6. Procédé selon l'une quelconque des revendications 1 à 5, dans lequel les affichages de type référence et les affichages de type non-référence sont au moins un parmi des affichages à cristaux liquides, des affichages à plasma, des affichages à tube cathodique, des affichages à traitement numérique de la lumière, des affichages à diodes électroluminescentes organiques, des affichages à cristaux liquides sur silicium et des affichages à intensificateur d'image à raccordement direct.

7. Système pour une correction chromatique, comprenant :
un module de correction chromatique (530) pour réaliser une correction chromatique initiale sur un contenu d'image source à l'aide d'un affichage de type référence ayant une gamme chromatique de référence pour obtenir un contenu d'image re-formé ayant subi une correction chromatique pour l'affichage sur des affichages de type référence ayant la gamme chromatique de référence;
un module de mappage de gamme chromatique (586) pour réaliser un mappage de gamme chromatique pour générer un premier ensemble de métadonnées définissant une description de mappage de gamme chromatique pour un mappage de gamme chromatique depuis un affichage de type non-référence ayant une gamme chromatique de non-référence vers l'affichage de type référence ;
un module de correction chromatique ultérieure (535) pour réaliser une correction chromatique ultérieure à l'aide de l'affichage de type non-référence et du contenu d'image re-formé ayant subi une correction chromatique pour créer un second ensemble de métadonnées concernant des affichages de type non-référence ayant la gamme chromatique de non-référence ;
un générateur de métadonnées d'ensemble final (566) pour générer un ensemble final de métadonnées à partir du premier ensemble de métadonnées et du second ensemble de métadonnées, pour une transformation chromatique ultérieure qui transforme chromatiquement le contenu d'image re-formé ayant subi une correction chromatique pour l'affichage sur des affichages de type non-référence pour une consommation des clients,
dans lequel le contenu d'image source est re-formé pour la consommation des clients seulement pour les affichages de type référence ayant la gamme chromatique de référence.

8. Système selon la revendication 7, dans lequel l'ensemble final de métadonnées est généré sans générer aucun autre contenu re-formé autre que le contenu d'image re-formé ayant subi une correction chromatique pour l'affichage sur des affichages de type référence.

9. Système selon la revendication 7 ou 8, dans lequel au moins un parmi le premier ensemble de métadonnées, le second ensemble de métadonnées et l'ensemble final de métadonnées est représenté par des tables de consultation respectives.

10. Système selon la revendication 9, dans lequel la table de consultation représentant l'ensemble final de métadonnées est formée par la concaténation d'une version inversée de la table de consultation représentant le second ensemble de métadonnées et la table de consultation représentant le premier ensemble de métadonnées.

11. Système selon la revendication 9, dans lequel l'ensemble final de métadonnées est fourni à un affichage de consommation final au moins un parmi l'intra-bande et le hors-bande par rapport au contenu d'affichage re-formé.

12. Système selon l'une quelconque des revendications 7 à 11, dans lequel les affichages de type référence et les affichages de type non-référence sont au moins un parmi des affichages à cristaux liquides, des affichages à plasma, des affichages à tube cathodique, des affichages à traitement numérique de la lumière, des affichages à diodes électroluminescentes organiques, des affichages à cristaux liquides sur silicium et des affichages à intensificateur d'image à raccordement direct.

13. Système selon la revendication 9, dans lequel le module de correction chromatique et le module de correction chromatique ultérieure ont compris dans une entité unique.

14. Produit programme d'ordinateur comprenant des instructions qui, lorsque le programme est exécuté par un ordinateur, conduisent celui-ci à mettre en oeuvre les étapes du procédé selon l'une quelconque des revendications 1 à 6.

15. Support d'enregistrement lisible par ordinateur comprenant des instructions qui, lorsqu'elles sont exécutées par un ordinateur, conduisent celui-ci à mettre en oeuvre les étapes du procédé selon l'une quelconque des revendications 1 à 6.

## Patentansprüche

1. Verfahren für eine Farbkorrektur, umfassend:
einen Schritt zur Durchführung (530) einer anfänglichen Farbkorrektur an einem Inhalt eines Quellbildes mit Hilfe einer Anzeige vom Referenztyp, die eine Referenzfarbskala hat, um einen neu gebildeten Bildinhalt zu erhalten, der einer Farbkorrektur unterzogen wurde, für die Anzeige auf Anzeigen vom Referenztyp mit der Referenzfarbskala,
**dadurch gekennzeichnet, dass** das Verfahren des Weiteren umfasst:
einen Schritt
zur Bestimmung (586) eines ersten Satzes von Metadaten, die eine Beschreibung eines Farbskala-Mappings definieren, für ein Farbskala-Mapping ausgehend von einer Anzeige vom Nicht-Referenztyp mit einer Nicht-Referenzfarbskala hin zu der Anzeige vom Referenztyp;
einen Schritt zur Durchführung (535) einer späteren Farbkorrektur mit Hilfe der Anzeige vom Nicht-Referenztyp und des neu gebildeten Bildinhalts, der einer Farbkorrektur unterzogen wurde, um einen zweiten Satz von Metadaten zu erstellen, bezogen auf Anzeigen vom Nicht-Referenztyp mit der Nicht-Referenzfarbskala;
einen Schritt
zum Erzeugen (566) eines abschließenden Satzes von Metadaten ausgehend von dem ersten Satz von Metadaten und dem zweiten Satz von Metadaten, für eine spätere Farbumwandlung, die den neu gebildeten Bildinhalt, der einer Farbkorrektur unterzogen wurde, farblich umwandelt, für die Anzeige auf Anzeigen vom Nicht-Referenztyp für den Kundenverbrauch,
in welchem der Inhalt eines Quellbildes für den Verbrauch der Kunden neu gebildet wird nur für die Anzeigen vom Referenztyp mit der Referenzfarbskala.

2. Verfahren nach Anspruch 1, in dem mindestens einer aus dem ersten Satz von Metadaten, dem zweiten Satz von Metadaten und dem abschließenden Satz von Metadaten durch entsprechende Nachschlagetabellen dargestellt wird.

3. Verfahren nach Anspruch 2, in dem die Nachschlagetabelle, die den abschließenden Satz von Metadaten darstellt, durch die Verkettung einer umgekehrten Version der Nachschlagetabelle, die den zweiten Satz von Metadaten darstellt, und der Nachschlagetabelle, die den ersten Satz von Metadaten darstellt, gebildet wird.

4. Verfahren nach einem der Ansprüche 1 bis 3, in dem die besagten Schritte zur Durchführung, der besagte Schritt zur Bestimmung und der besagte Schritt zum Erzeugen sich auf eine Erstellung des Anzeigeinhalts für einen späteren Verbrauch der Kunden (590) beziehen.

5. Verfahren nach einem der Ansprüche 1 bis 4, in dem der abschließende Satz von Metadaten an eine Endverbrauchsanzeige mindestens eines Innenbandes und eines Außenbandes bezogen auf den neu gebildeten Anzeigeinhalt geliefert wird.

6. Verfahren nach einem der Ansprüche 1 bis 5, in dem die Anzeigen vom Referenztyp und die Anzeigen vom Nicht-Referenztyp wenigstens eine aus den Flüssigkristallanzeigen, Plasmaanzeigen, Kathodenstrahlröhrenanzeigen, Digital Light Processing-Anzeigen, organischen Leuchtdioden-Anzeigen, Flüssigkristallanzeigen auf Siliziumbasis und Bildverstärkeranzeigen mit Direktanschluss sind.

7. Verfahren für eine Farbkorrektur, umfassend:
ein Modul zur Farbkorrektur (530), um eine anfängliche Farbkorrektur an einem Inhalt eines Quellbildes durchzuführen, mit Hilfe einer Anzeige vom Referenztyp mit einer Referenzfarbskala, um einen neu gebildeten Bildinhalt zu erhalten, der einer Farbkorrektur unterzogen wurde, für die Anzeige auf Anzeigen vom Referenztyp mit einer Referenzfarbskala;
ein Modul für das Farbskala-Mapping (586), um ein Farbskala-Mapping durchzuführen, um einen ersten Satz von Metadaten zu erzeugen, die eine Beschreibung eines Farbskala-Mappings definieren, für ein Farbskala-Mapping ausgehend von einer Anzeige vom Nicht-Referenztyp mit einer Nicht-Referenzfarbskala hin zu der Anzeige vom Referenztyp;
ein Modul für die spätere Farbkorrektur (535), um eine spätere Farbkorrektur mit Hilfe der Anzeige vom Nicht-Referenztyp und des neu gebildeten Bildinhalts, der einer Farbkorrektur unterzogen wurde, durchzuführen, um einen zweiten Satz von Metadaten zu erstellen, bezogen auf Anzeigen vom Nicht-Referenztyp mit der Nicht-Referenzfarbskala;
einen Erzeuger von Metadaten eines abschließenden Satzes (566), um einen abschließenden Satz von Metadaten ausgehend von dem ersten Satz von Metadaten und dem zweiten Satz von Metadaten zu erzeugen, für eine spätere Farbumwandlung, die den neu gebildeten Bildinhalt, der einer Farbkorrektur unterzogen wurde, farblich umwandelt, für die Anzeige auf Anzeigen vom Nicht-Referenztyp für den Kundenverbrauch,
in welchem der Inhalt einer Bildquelle für den Verbrauch der Kunden nur für die Anzeigen vom Referenztyp, die die Referenzfarbskala haben, neu gebildet wird.

8. System nach Anspruch 7, in dem der abschließende Satz von Metadaten erzeugt wird, ohne einen anderen neu gebildeten Inhalt zu erzeugen als den neu gebildeten Bildinhalt, der einer Farbkorrektur unterzogen wurde, für die Anzeige auf Anzeigen vom Referenztyp.

9. System nach Anspruch 7 oder 8, in dem mindestens ein Satz aus dem ersten Satz von Metadaten, dem zweiten Satz von Metadaten und dem abschließenden Satz von Metadaten durch jeweilige Nachschlagetabellen dargestellt wird.

10. System nach Anspruch 9, in dem die Nachschlagetabelle, die den abschließenden Satz von Metadaten darstellt, durch die Verkettung einer umgekehrten Version der Nachschlagetabelle, die den zweiten Satz von Metadaten darstellt, und der Nachschlagetabelle, die den ersten Satz von Metadaten darstellt, gebildet wird.

11. System nach Anspruch 9, in dem der abschließende Satz von Metadaten an eine Endverbrauchsanzeige von mindestens einem Innenband und einem Außenband bezogen auf den neu gebildeten Anzeigeinhalt geliefert wird.

12. System nach einem der Ansprüche 7 bis 11, in dem die Anzeigen vom Referenztyp und die Anzeigen vom Nicht-Referenztyp wenigstens eine aus den Flüssigkristallanzeigen, Plasmaanzeigen, Kathodenstrahlröhrenanzeigen, Digital Light Processing-Anzeigen, organischen Leuchtdioden-Anzeigen, Flüssigkristallanzeigen auf Siliziumbasis und Bildverstärkeranzeigen mit Direktanschluss sind.

13. System nach Anspruch 9, in dem das Modul zur Farbkorrektur und das Modul zur späteren Farbkorrektur in einer einzigen Einheit enthalten sind.

14. Computerprogrammprodukt, das Anweisungen umfasst, die, wenn das Programm durch einen Computer ausgeführt wird, diesen dazu bringen, die Schritte des Verfahrens nach einem der Ansprüche 1 bis 6 umzusetzen.

15. Durch einen Computer lesbares Aufzeichnungsmedium, das Anweisungen umfasst, die, wenn sie durch einen Computer ausgeführt werden, diesen dazu bringen, die Schritte des Verfahrens nach einem der Ansprüche 1 bis 6 umzusetzen.

## Claims

1. Method for a colour correction, comprising:
a step for performing (530) an initial colour correction on a source picture content using a reference type display having a reference colour gamut to obtain a mastered picture content subject to a colour correction for the display of reference type displays having a reference colour gamut;
**characterized in that** the method also comprises:
a step for determining (586) a first set of metadata defining a colour gamut mapping description for a colour gamut mapping from a non-reference type display having a non-reference colour gamut to a reference type display;
a step for performing (535) a subsequent colour correction using the non-reference type display and mastered picture content subject to a colour correction to generate a second set of metadata for non-reference type displays having the non-reference colour gamut;
a step for generating (566) a final set of metadata from the first set of metadata and second set of metadata, for a subsequent colour transformation that transforms the colour of the mastered picture content subject to a colour correction for the display on non-reference type displays for client use,
wherein the source picture content is mastered only for client use for reference type displays having the reference colour gamut.

2. Method according to claim 1, wherein at least one of the first set of metadata, second set of metadata and final set of metadata is represented by respective lookup tables.

3. Method according to claim 2, wherein the lookup table representing the final set of metadata is generated from the concatenation of an inverted version of the lookup table representing the second set of metadata and the lookup table representing the first set of metadata.

4. Method according to any one of claims 1 to 3, wherein said performance steps, said determination step and said generation step cover the creation of display content for subsequent client use (590).

5. Method according to any one of claims 1 to 4, wherein the final set of metadata is provided for a final consumption display at least one of the in-band and out-of-band with respect to the mastered display content.

6. Method according to any one of claims 1 to 5, wherein the reference type displays and the non-reference type displays are at least one of liquid crystal displays, plasma displays, cathode ray tube displays, digital light processing displays, organic light emitting diode displays, liquid crystal on silicon displays, and direct drive image light amplifier displays.

7. System for a colour correction, comprising:
a colour correction module (530) for the performance of an initial colour correction on a source picture content using a reference type display having a reference colour gamut to obtain a mastered picture content subject to a colour correction for the display on reference type displays having the reference colour gamut;
a colour gamut mapping module (586) for the performance of a colour gamut mapping to generate a first set of metadata defining a colour gamut mapping description for a colour gamut mapping from a non-reference type display having a non-reference colour gamut to the reference type display;
a subsequent colour correction module (535) for the performance of a subsequent colour correction using the non-reference type display and the mastered picture content subject to a colour correction to generate a second set of metadata for non-reference type displays having the non-reference colour gamut;
a subsequent colour correction module (535) for the performance of a subsequent colour correction using the non-reference type display and the mastered picture content subject to a colour correction to generate a second set of metadata for non-reference type displays having the non-reference colour gamut;
a final set metadata generator (566) for the generation of a final set of metadata from the first set of metadata and second set of metadata, for a subsequent colour transformation that transforms the colour of the mastered picture content subject to a colour correction for the display on non-reference type displays for client use,
wherein the source picture content is mastered only for client use for reference type displays having the reference colour gamut.

8. System according to claim 7, wherein the final set of metadata is generated without generating any other mastered content than the mastered picture content subject to a colour correction for display on reference type displays.

9. System according to claim 7 or 8, wherein at least one of the first set of metadata, second set of metadata and final set of metadata is represented by respective lookup tables.

10. System according to claim 9, wherein the lookup table representing the final set of metadata is generated from the concatenation of an inverted version of the lookup table representing the second set of metadata and the lookup table representing the first set of metadata.

11. System according to claim 9, wherein the final set of metadata is provided for a final consumption display at least one of the in-band and out-of-band with respect to the mastered display content.

12. System according to any one of claims 7 to 11, wherein the reference type displays and the non-reference type displays are at least one of liquid crystal displays, plasma displays, cathode ray tube displays, digital light processing displays, organic light emitting diode displays, liquid crystal on silicon displays, and direct drive image light amplifier displays.

13. System according to claim 9, wherein the colour correction module and subsequent colour correction module are part of a unique entity.

14. Computer programme product comprising instructions that, when the programme is run by a computer, prompt it to implement the process steps according to any one of claims 1 to 6.

15. Backup medium readable by a computer comprising instructions that, when the programme is run by a computer, prompt it to implement the process steps according to any one of claims 1 to 6.
